# EUROPÄISCHE PATENTANMELDUNG

(11) **EP 2 774 853 A1**
(43) Veröffentlichungstag der Anmeldung: **10.09.2014**
(21) Anmeldenummer: 13158138.1
(22) Anmeldetag: 07.03.2013
(51) Int. Cl.: B64D 27/26, B64D 29/06, H02K 1/20, H02K 5/12, H02K 9/197, H02K 9/20, H02K 11/00

(54) **Antriebsgondel für ein Flugzeug**

(71) Anmelder: Siemens Aktiengesellschaft, 80333 München (DE)
(72) Erfinder: Anton, Frank, 91052 Erlangen (DE); Klöpzig, Markus, 91320 Ebermannstadt (DE); Körner, Olaf, 90469 Nürnberg (DE); Weigel, Jan, 91077 Großenbuch (DE); Wilke, Markus, 91054 Erlangen (DE)

(57) **Zusammenfassung**

Eine Antriebsgondel (1) für ein Flugzeug weist ein Gehäuse (2) auf, in dem eine elektrische Maschine (3), eine Umrichtereinheit (4) und eine Steuereinrichtung (5) angeordnet sind. Die elektrische Maschine (3) wird über die Umrichtereinheit (4) mit elektrischer Energie versorgt. Die Antriebsgondel (1) weist eine mechanische Verbindungsvorrichtung (10) zum Verbinden der Antriebsgondel (1) mit einem Flugzeug auf. Die Antriebsgondel (1) weist eine elektrische Anschlusseinrichtung (6) zum Anschließen elektrischer Leistungsanschlüsse (7) auf, über die die Umrichtereinheit (4) mit einer elektrischen Energieversorgungseinrichtung verbunden wird. Die Antriebsgondel weist eine Kommunikationsverbindung (11) zum Verbinden der Steuereinrichtung (5) mit einer übergeordneten Steuereinrichtung auf. Hierbei werden zumindest die elektrische Maschine (3) und die Umrichtereinheit (4) mittels mindestens eines geschlossenen Kühlmittelkreislaufs (13) gekühlt. In dem mindestens einen geschlossenen Kühlmittelkreislauf (13) zirkuliert ein flüssiges Kühlmittel. Das Gehäuse (2) ist als Kühler für das flüssige Kühlmittel ausgebildet ist. Alternativ oder zusätzlich ist am Gehäuse (2) eine Lufthutze zum Zuführen von Kühlluft zu einem im Inneren des Gehäuses (2) angeordneten Wärmetauscher (15) angeordnet.

## Beschreibung

Die vorliegende Erfindung betrifft eine Antriebsgondel für ein Flugzeug.

Elektrische Maschinen mit hoher Leistungsdichte benötigen ein aufwändiges Kühlsystem. Je höher die Leistungsdichte (in kW/kg) sein soll, desto mehr Aufwand wird in der Regel für die Kühlung benötigt. Der Aufwand steigt noch weiter, wenn die Dauerleistung der elektrischen Maschine an die Kurzzeitleistung der elektrischen Maschine angeglichen werden soll.

Der Aufwand für das Kühlsystem ist relativ niedrig, wenn eine reine Luftkühlung verwendet wird. Mit einer reinen Luftkühlung ist jedoch nur eine relativ geringe Kühlwirkung erzielbar.

Aus der DE 10 62 804 B ist eine elektrische Maschine bekannt, bei welcher die Ständerwicklung aus Hohlleitern besteht, in denen ein flüssiges Kühlmittel geführt wird. Die elektrische Maschine der genannten DE-Schrift ist ein Hochspannungsgenerator.

Der EP 1 852 956 A1 ist ein ähnlicher Offenbarungsgehalt zu entnehmen. Als Kühlmittel wird bei der EP 1 852 956 A1 Kohlendioxid verwendet. Auch hier ist als Anwendungsfall ein Generator genannt.

Die Aufgabe der vorliegenden Erfindung besteht darin, eine Antriebsgondel für ein Flugzeug zu schaffen, die - unter Berücksichtigung des Gewichts des Kühlsystems - eine hohe Leistungsdichte aufweist.

Die Aufgabe wird durch eine Antriebsgondel für ein Flugzeug mit den Merkmalen des Anspruchs 1 gelöst. Vorteilhafte Ausgestaltungen der erfindungsgemäßen Antriebsgondel sind Gegenstand der abhängigen Ansprüche 2 bis 13.

Erfindungsgemäß wird eine Antriebsgondel für ein Flugzeug vorgeschlagen,
- wobei die Antriebsgondel ein Gehäuse aufweist, in dem eine elektrische Maschine, eine Umrichtereinheit und eine Steuereinrichtung angeordnet sind,
- wobei die elektrische Maschine über die Umrichtereinheit mit elektrischer Energie versorgt wird,
- wobei die Antriebsgondel eine mechanische Verbindungsvorrichtung zum Verbinden der Antriebsgondel mit einem Flugzeug aufweist,
- wobei die Antriebsgondel eine elektrische Anschlusseinrichtung zum Anschließen elektrischer Leistungsanschlüsse aufweist, über die die Umrichtereinheit mit einer elektrischen Energieversorgungseinrichtung verbunden wird,
- wobei die Antriebsgondel eine Kommunikationsverbindung zum Verbinden der Steuereinrichtung mit einer übergeordneten Steuereinrichtung aufweist,
- wobei zumindest die elektrische Maschine und die Umrichtereinheit mittels mindestens eines geschlossenen Kühlmittelkreislaufs gekühlt werden,
- wobei in dem mindestens einen geschlossenen Kühlmittelkreislauf ein flüssiges Kühlmittel zirkuliert,
- wobei das Gehäuse als Kühler für das flüssige Kühlmittel ausgebildet ist und/oder am Gehäuse eine Lufthutze zum Zuführen von Kühlluft zu einem im Inneren des Gehäuses angeordneten Wärmetauscher angeordnet ist.

Vorzugsweise sind die mechanische Verbindungsvorrichtung, die elektrische Anschlusseinrichtung und die Kommunikationsverbindung derart angeordnet und ausgebildet, dass beim mechanischen Verbinden der Antriebsgondel mit dem Flugzeug automatisch und zwangsläufig auch die Verbindung der Umrichtereinheit mit der elektrischen Energieversorgungseinrichtung und der Steuereinrichtung mit der übergeordneten Steuereinrichtung hergestellt werden. Dadurch wird erreicht, dass nur ein einzelner (mechanischer) Verbindungsvorgang bewerkstelligt werden muss, um alle erforderlichen Verbindungen der Antriebsgondel zum Flugzeug herzustellen.

Vorzugsweise werden die Umrichtereinheit und/oder ein Stator der elektrischen Maschine direkt mittels des flüssigen Kühlmittels gekühlt. Dadurch ergibt sich insbesondere ein einfacher Aufbau des Kühlsystems.

In einer weiter bevorzugten Ausgestaltung der vorliegenden Erfindung ist vorgesehen, dass ein Rotor der elektrischen Maschine in einem gekapselten Rotorraum angeordnet ist und dass der Rotor mittels einer Sprühnebelkühlung oder durch einen Rotorkühlmittelkreislauf gekühlt wird. Dadurch ergibt sich insbesondere eine effiziente Kühlung auch des Rotors. Die Leistung der elektrischen Maschine kann dadurch gesteigert werden, ohne die Gefahr von Schäden befürchten zu müssen. Der Rotorkühlmittelkreislauf kann beispielsweise mittels einer dem Rotor über die Rotorwelle zugeführten Kühlflüssigkeit realisiert sein. Die Umwälzung dieser Kühlflüssigkeit kann durch Zwangsumwälzung mittels einer Pumpe, durch Phasenumwandlung, durch Kapillareffekte, durch Schwerkraft oder durch Trägheit realisiert sein.

Die Sprühnebelkühlung kann als von dem geschlossenen Kühlmittelkreislauf getrennter eigenständiger Kühlmittelkreislauf ausgebildet sein. In diesem Fall wird vorzugsweise die Sprühnebelkühlung mittels des geschlossenen Kühlmittelkreislaufs gekühlt. Alternativ kann das Gehäuse als Kühler für die Sprühnebelkühlung ausgebildet sein.

Der Rotor ist in der Regel auf einer Rotorwelle angeordnet, die in Lagern gelagert ist. Vorzugsweise werden auch die Lager mittels der Sprühnebelkühlung gekühlt.

Es ist möglich, dass der Rotor (bzw. die Rotorwelle) direkt auf eine Strömungsmaschine (Rotor, Propeller, Impeller,...) wirkt. Alternativ kann der Rotor über ein Getriebe auf eine Strömungsmaschine wirken. Im Falle eines Getriebes kann das Getriebe innerhalb des gekapselten Rotorraums angeordnet sein.

Vorzugsweise ist mit dem geschlossenen Kühlmittelkreislauf ein Druckausgleichsgefäß verbunden. Dadurch werden übermäßige Drücke im geschlossenen Kühlmittelkreislauf auch bei erheblichen Temperaturunterschieden vermieden.

In einer bevorzugten Ausgestaltung der vorliegenden Erfindung wird das flüssige Kühlmittel in dem geschlossenen Kühlmittelkreislauf mittels einer Umwälzpumpe umgewälzt. Alternativ kann eine Eigenumwälzung beispielsweise durch Phasenumwandlung, Kapillareffekte, Schwerkraft oder Trägheit erfolgen.

Vorzugsweise weist die Umrichtereinheit mehrere Umrichter auf, die jeweils ein Wicklungssystem der elektrischen Maschine speisen, so dass die elektrische Maschine auch bei Ausfall eines Umrichters und/oder des dem jeweiligen Umrichter zugeordneten Wicklungssystems mittels der verbleibenden Umrichter und der verbleibenden Wicklungssysteme weiter betriebsfähig bleibt. Dadurch kann die Betriebssicherheit erheblich vergrößert werden. Insbesondere die Gefahr eines Absturzes des Flugzeugs aufgrund eines Triebwerkschadens kann dadurch erheblich reduziert werden.

Der geschlossene Kühlmittelkreislauf kann nach Bedarf ausgebildet sein. Beispielsweise kann der geschlossene Kühlmittelkreislauf eine Leiterdirektkühlung und/oder eine Mantelkühlung der elektrischen Maschine umfassen. Eine Leiterdirektkühlung kann beispielsweise in Form einer Hohlleiterkühlung oder in Form einer Kühlung, deren Kühlkanäle in den Statornuten angeordnet sind, realisiert sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: in Blockdarstellung eine Antriebsgondel für ein Flugzeug,
- FIG 2: eine Umrichtereinheit und eine Statorwicklung,
- FIG 3: eine Antriebsgondel in der Seitenansicht,
- FIG 4: eine Ausgestaltung der Antriebsgondel von FIG 3 in der Seitenansicht,
- FIG 5: die Antriebsgondel von FIG 4 im Schnitt längst einer Linie V-V in FIG 4,
- FIG 6: eine Ausgestaltung der Antriebsgondel von FIG 4 in der Seitenansicht,
- FIG 7: die Antriebsgondel von FIG 6 im Schnitt längst einer Linie VII-VII in FIG 6,
- FIG 8: eine weitere Ausgestaltung der Antriebsgondel von FIG 3 in der Seitenansicht und
- FIG 9: die Antriebsgondel von FIG 8 im Schnitt längst einer Linie IX-IX in FIG 8.

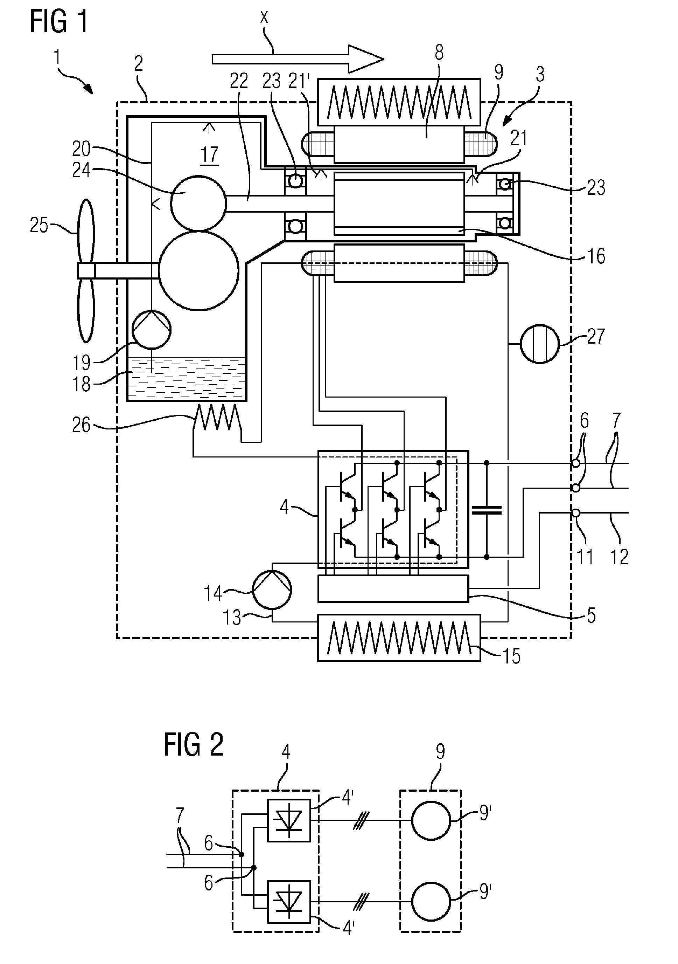

Gemäß FIG 1 weist eine Antriebsgondel 1 für ein (nicht dargestelltes) Flugzeug ein Gehäuse 2 auf. In dem Gehäuse 2 sind eine elektrische Maschine 3, eine Umrichtereinheit 4 und eine Steuereinrichtung 5 angeordnet. Über die Umrichtereinheit 4 wird die elektrische Maschine 3 mit elektrischer Energie versorgt. Die Umrichtereinheit 4 ist wiederum einer elektrischen Anschlusseinrichtung 6 verbunden. An die Anschlusseinrichtung 6 werden Leistungsanschlüsse 7 angeschlossen. Dadurch wird die Umrichtereinheit 4 mit einer (externen) elektrischen Energieversorgungseinrichtung (nicht dargestellt) verbunden.

Es ist möglich, dass die der Umrichtereinheit 4 über die Anschlusseinrichtung 6 zugeführte elektrische Energie Gleichspannung ist. In diesem Fall kann zwischen der Umrichtereinheit 4 und der Anschlusseinrichtung 6 ein Stützkondensator angeordnet sein. Alternativ ist eine Versorgung mit Wechselspannung möglich. Es ist möglich, dass der Energiefluss unidirektional ist, d.h. nur von der elektrischen Energieversorgungseinrichtung zur Umrichtereinheit 4 gerichtet ist. Vorzugsweise ist jedoch ein bidirektionaler Energiefluss möglich. Unabhängig von der Art des Energieflusses (Gleich- oder Wechselspannung, uni-oder bidirektional) versorgt die Umrichtereinheit 4 jedoch die elektrische Maschine 3 - insbesondere eine in einem Stator 8 angeordnete Statorwicklung 9 mit elektrischer Energie in Form von (mindestens) dreiphasigem Drehstrom.

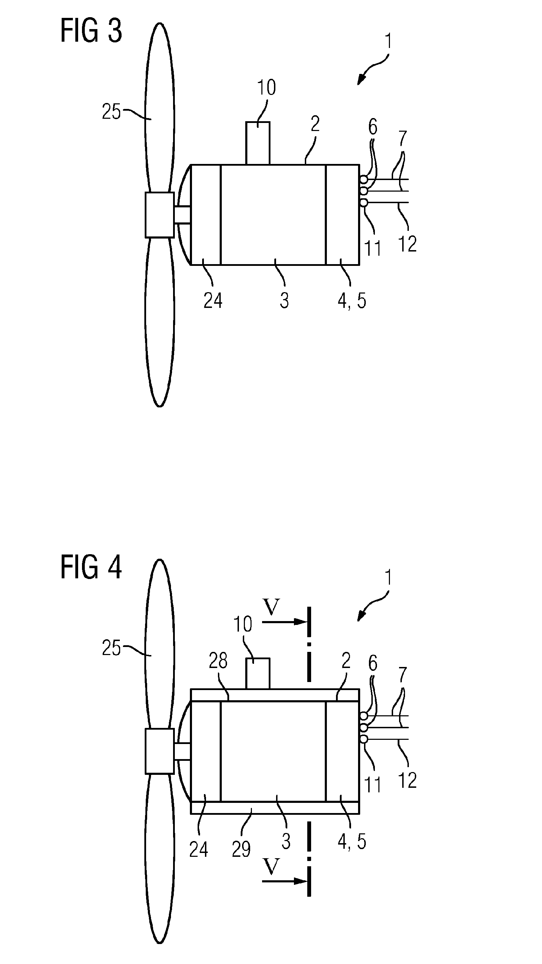

Die Antriebsgondel 1 weist weiterhin - siehe beispielsweise FIG 3, 4, 6 und 8 - eine mechanische Verbindungsvorrichtung 10 auf. Mittels der mechanischen Verbindungsvorrichtung 10 kann die Antriebsgondel 1 mit einem Flugzeug verbunden werden, beispielsweise mit dem Rumpf, einer Tragfläche oder einem Flügelpylon des Flugzeugs.

Die Antriebsgondel 1 weist weiterhin eine Kommunikationsverbindung 11 auf. Über die Kommunikationsverbindung 11 wird die Steuereinrichtung 5 mit einer (nicht dargestellten) übergeordneten Steuereinrichtung verbunden. Die übergeordnete Steuereinrichtung kann beispielsweise eine Mensch-Maschine-Schnittstelle aufweisen, über welche der Pilot des Flugzeugs bestimmte Leistungsanforderungen für die elektrische Maschine 3 vorgibt. Die Steuereinrichtung 5 setzt ihr vorgegebene Leistungsanforderungen oder ähnliche Steuersignale in Steuersignale für die Umrichtereinheit 4 um und steuert die Umrichtereinheit 4 entsprechend an. Weiterhin übermittelt sie erfasste Istdaten der Antriebsgondel 1 (beispielsweise Drehzahl, Temperatur, Kontrolldaten) an die übergeordnete Steuereinrichtung.

Es ist möglich, dass die Leistungsanschlüsse 7 unabhängig von der mechanischen Verbindung der Antriebsgondel 1 mit dem Flugzeug über die mechanische Verbindungsvorrichtung 10 mit der elektrischen Anschlusseinrichtung 6 verbunden und von ihr gelöst werden können. Gleiches gilt für Signalleitungen 12, über welche die Steuereinrichtung 5 mit der übergeordneten Steuereinrichtung verbunden wird. Vorzugsweise jedoch sind die mechanische Verbindungsvorrichtung 10, die elektrische Anschlusseinrichtung 6 und die Kommunikationsverbindung 11 derart angeordnet und ausgebildet, dass beim mechanischen Verbinden der Antriebsgondel 1 mit dem Flugzeug automatisch und zwangsläufig auch die Verbindung der Umrichtereinheit 4 mit der elektrischen Energieversorgungseinrichtung und der Steuereinrichtung 5 mit der übergeordneten Steuereinrichtung hergestellt wird. Insbesondere können die elektrische Anschlusseinrichtung 6 und die Kommunikationsverbindung 11 in die mechanische Verbindungsvorrichtung 10 integriert sein.

Gemäß FIG 1 weist die Antriebsgondel 1 einen geschlossenen Kühlmittelkreislauf 13 auf. In dem geschlossenen Kühlmittelkreislauf 13 zirkuliert ein flüssiges Kühlmittel, beispielsweise Wasser. Beispielsweise kann eine Umwälzpumpe 14 vorhanden sein, mittels derer das flüssige Kühlmittel in dem geschlossenen Kühlmittelkreislauf umgewälzt wird. Mittels des geschlossenen Kühlmittelkreislaufes 13 werden (zumindest) die elektrische Maschine 3 und die Umrichtereinheit 4 gekühlt. Insbesondere werden entsprechend der Darstellung in FIG 1 mittels des flüssigen Kühlmittels vorzugsweise zumindest die Umrichtereinheit 4 und/oder der Stator 8 der elektrischen Maschine 3 direkt gekühlt. Gegebenenfalls können für die elektrische Maschine 3 und die Umrichtereinheit 4 auch separate Kühlmittelkreisläufe 13 realisiert sein. In diesem Fall können die Kühlmittelkreisläufe 13 alternativ mit dem gleichen Kühlmittel oder mit voneinander verschiedenen Kühlmitteln betrieben werden. Auch ist es möglich, die Kühlmittelkreisläufe mit unterschiedlichen Betriebstemperaturen zu betreiben. Weiterhin kann die elektrische Maschine 3 ein Lüfterrad aufweisen, welches gezielt Kühlluft zur Umrichtereinheit 4 führt und diese - in der Regel ergänzend zu der Kühlung mit dem Kühlmittel - direkt kühlt. Auch so genannte Naca-Einläufe, wie sie bei Flugzeugen üblich sind, sind möglich.

Die vom Kühlmittel des geschlossenen Kühlmittelkreislaufes 13 aufgenommene Wärme muss an die Umgebung abgegeben werden. Zu diesem Zweck ist (mindestens) ein Wärmetauscher 15 vorhanden. Der Wärmetauscher 15 ist Bestandteil des Gehäuses 2. Das Gehäuse 2 ist somit als Kühler für das flüssige Kühlmittel ausgebildet. Alternativ oder zusätzlich zur Ausbildung des Gehäuses 2 als Kühler ist es möglich, dass der Wärmetauscher 15 innerhalb des Gehäuses 2 angeordnet ist. In diesem Fall ist am Gehäuse 2 vorzugsweise eine Lufthutze angeordnet, mittels derer dem Wärmetauscher 15 Kühlluft zugeführt wird. Die Lufthutze kann an einer beliebigen Stelle der Antriebsgondel 1 angeordnet sein.

Das flüssige Kühlmittel liegt in der Regel im gesamten geschlossenen Kühlmittelkreislauf 13 in flüssiger Form vor. Es ist jedoch alternativ möglich, dass das flüssige Kühlmittel während des Kühlens des Stators 8 der elektrischen Maschine 3 und/oder der Umrichtereinheit 4 in den gasförmigen Zustand übergeht (Verdampfung). In diesem Fall ist der Wärmetauscher 15 als Kondensator ausgebildet.

Die elektrische Maschine 3 weist weiterhin einen Rotor 16 auf. Der Rotor 16 ist vorzugsweise in einem gekapselten Rotorraum 17 angeordnet. Der Rotor 16 wird vorzugsweise mittels einer Sprühnebelkühlung gekühlt.

Die Sprühnebelkühlung ist vorzugsweise als von dem geschlossenen Kühlmittelkreislauf 13 getrennter eigenständiger Kühlmittelkreislauf ausgebildet. Beispielsweise kann innerhalb des Rotorraums 17 ein Kühlmittelsumpf 18 bestehen. Der Kühlmittelsumpf 18 kann beispielsweise ein Ölsumpf sein. Mittels einer Saugpumpe 19 wird Kühlmittel des getrennten eigenständigen Kühlmittelkreislaufes angesaugt und über ein Verteilersystem 20 zu Sprühdüsen 21 geführt, an denen das angesaugte Kühlmittel zu der Sprühnebelkühlung versprüht wird. Das versprühte Kühlmittel verdunstet vorzugsweise und entzieht dadurch insbesondere dem Rotor 16 Wärme.

Der Rotor 16 ist auf einer Rotorwelle 22 angeordnet. Die Rotorwelle 22 ist in Lagern 23 gelagert. Die Lager 23 sind vorzugsweise im geschlossenen Rotorraum 17 angeordnet. Vorzugsweise werden auch die Lager 23 mittels der Sprühnebelkühlung gekühlt. Beispielsweise können im Bereich der Lager 23 eigene Sprühdüsen 21' für die Kühlung der Lager 23 angeordnet sein.

Der Rotor 16 (genauer: die Rotorwelle 22) wirkt weiterhin direkt oder - wie in FIG 1 dargestellt - über ein Getriebe 24 auf eine Strömungsmaschine 25, beispielsweise einen Propeller eines normalen Flugzeugs oder einen Hauptrotor oder einen Heckrotor eines Hubschraubers. Das Getriebe 24 kann, sofern es vorhanden ist, innerhalb des gekapselten Rotorraums 17 angeordnet sein. Es kann - insbesondere durch Kontaktkühlung - ebenfalls mittels des Kühlmittels des getrennten, eigenständigen Kühlmittelkreislaufes gekühlt werden.

Das Kühlmittel des getrennten, eigenständigen Kühlmittelkreislaufes muss die von ihm aufgenommene Wärme ebenfalls an die Umgebung abführen. Es ist möglich, dass das Gehäuse 2 nicht nur als Kühler für das flüssige Kühlmittel des geschlossenen Kühlmittelkreislaufes 13, sondern zusätzlich auch als Kühler für die Sprühnebelkühlung ausgebildet ist. Alternativ ist es entsprechend der Darstellung in FIG 1 möglich, dass die Sprühnebelkühlung mittels des geschlossenen Kühlmittelkreislaufs 13 gekühlt wird. In diesem Fall ist vorzugsweise ein weiterer Wärmetauscher 26 vorhanden, über den der Kühlmittelsumpf des getrennten eigenständigen Kühlmittelkreislaufes gekühlt wird. Die Wärme wird in diesem Fall von dem Kühlmittel des geschlossenen Kühlmittelkreislaufes 13 aufgenommen.

Entsprechend der Darstellung in FIG 1 ist innerhalb des geschlossenen Kühlmittelkreislaufs 13 ein Druckausgleichsgefäß 27 angeordnet. Dadurch wird im geschlossenen Kühlmittelkreislauf 13 im wesentlichen unabhängig von der Umgebungstemperatur ein im wesentlichen konstant der Druck aufrechterhalten.

Gemäß FIG 2 weist die Umrichtereinheit 4 mehrere Umrichter 4' auf. Weiterhin weist die Statorwicklung 9 mehrere Wicklungssysteme 9' auf. Jeder Umrichter 4' speist ein Wicklungssystem 9' der elektrischen Maschine 3. Fällt einer der Umrichter 4' aus, so kann die elektrische Maschine 3 mittels der verbleibenden, weiterhin ordnungsgemäß funktionierenden Umrichter 4' weiter betrieben werden. Die elektrische Maschine 3 bleibt also trotz des Ausfalls eines der Umrichter 4' - wenn auch eventuell nur mit reduzierter Leistung - weiter betriebsfähig. In analoger Weise bleibt die elektrische Maschine 3 weiter betriebsfähig, wenn eines der Wicklungssysteme 9' ausfällt.

FIG 3 zeigt eine mechanisch-konstruktive Anordnung der Komponenten in der Antriebsgondel 1 für den Fall einer Ausgestaltung der Strömungsmaschine 25 als Zugpropeller. Insbesondere ist in diesem Fall in Strömungsrichtung x gesehen das Getriebe 24 (falls vorhanden) zwischen der Strömungsmaschine 25 und der elektrischen Maschine 3 angeordnet. Die elektrische Maschine 3 wiederum ist zwischen der Strömungsmaschine 25 oder (falls vorhanden) dem Getriebe 24 und der Umrichtereinheit 4 angeordnet.

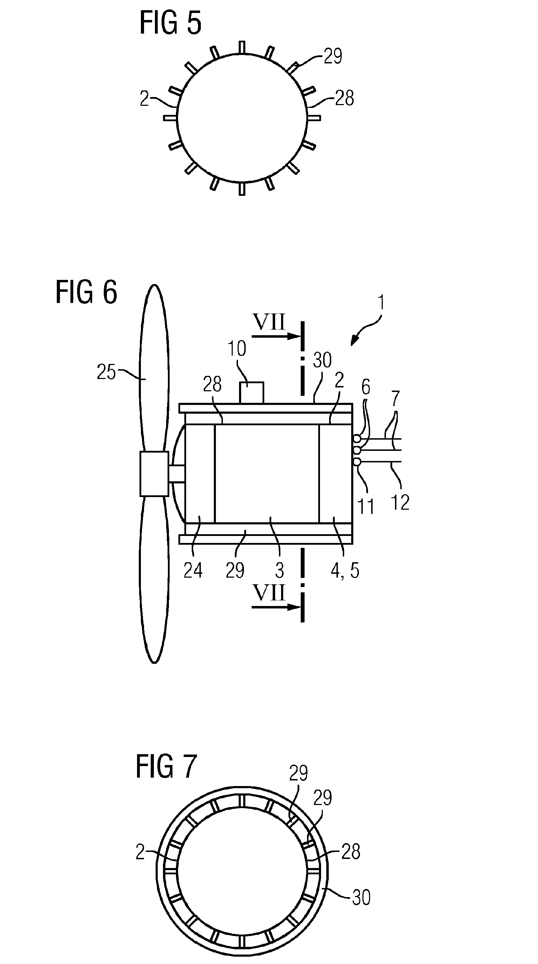

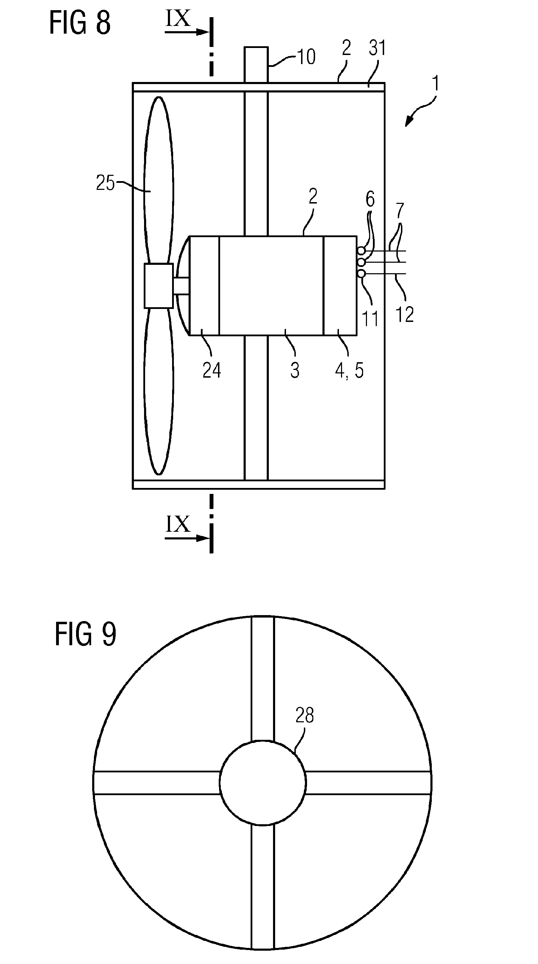

Die Ausgestaltungen gemäß den FIG 4 bis 9 bauen auf der Ausgestaltung von FIG 3 auf. Gemäß den FIG 4 und 5 kann die Antriebsgondel 1 auf ihrer Mantelfläche 28 Kühlrippen 29 aufweisen, um die Wärmeabgabe an die Umgebung zu optimieren. Die Kühlrippen 29 verlaufen in Strömungsrichtung x. Gemäß den FIG 6 und 7 können die Kühlrippen 29 zusätzlich von einem Mantelring 30 umgeben sein. Gemäß den FIG 8 und 9 kann die Strömungsmaschine 25 von einem Propellermantel 31 umgeben sein. Der Propellermantel 31 ist in diesem Fall Bestandteil des Gehäuses 2. Zumindest die mechanische Verbindungsvorrichtung 10 befindet sich in diesem Fall radial außerhalb des Propellermantels 31.

Die vorliegende Erfindung weist viele Vorteile auf. Insbesondere kann auf einfache Weise eine effiziente Kühlung der elektrischen Maschine 3 in das Gehäuse 2 integriert werden, so dass die Leistungsdichte gegenüber konventionellen elektrischen Maschinen deutlich gesteigert werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Antriebsgondel für ein Flugzeug,
- wobei die Antriebsgondel ein Gehäuse (2) aufweist, in dem eine elektrische Maschine (3), eine Umrichtereinheit (4) und eine Steuereinrichtung (5) angeordnet sind,
- wobei die elektrische Maschine (3) über die Umrichtereinheit (4) mit elektrischer Energie versorgt wird,
- wobei die Antriebsgondel eine mechanische Verbindungsvorrichtung (10) zum Verbinden der Antriebsgondel mit einem Flugzeug aufweist,
- wobei die Antriebsgondel eine elektrische Anschlusseinrichtung (6) zum Anschließen elektrischer Leistungsanschlüsse (7) aufweist, über die die Umrichtereinheit (4) mit einer elektrischen Energieversorgungseinrichtung verbunden wird,
- wobei die Antriebsgondel eine Kommunikationsverbindung (11) zum Verbinden der Steuereinrichtung (5) mit einer übergeordneten Steuereinrichtung aufweist,
- wobei zumindest die elektrische Maschine (3) und die Umrichtereinheit (4) mittels mindestens eines geschlossenen Kühlmittelkreislaufs (13) gekühlt werden,
- wobei in dem mindestens einen geschlossenen Kühlmittelkreislauf (13) ein flüssiges Kühlmittel zirkuliert,
- wobei das Gehäuse (2) als Kühler für das flüssige Kühlmittel ausgebildet ist und/oder am Gehäuse (2) eine Lufthutze zum Zuführen von Kühlluft zu einem im Inneren des Gehäuses (2) angeordneten Wärmetauscher (15) angeordnet ist.

2. Antriebsgondel nach Anspruch 1, **dadurch gekennzeichnet, dass** die mechanische Verbindungsvorrichtung (10), die elektrische Anschlusseinrichtung (6) und die Kommunikationsverbindung (11) derart angeordnet und ausgebildet sind, dass beim mechanischen Verbinden der Antriebsgondel mit dem Flugzeug automatisch und zwangsläufig auch die Verbindung der Umrichtereinheit (4) mit der elektrischen Energieversorgungseinrichtung und der Steuereinrichtung (5) mit der übergeordneten Steuereinrichtung hergestellt werden.

3. Antriebsgondel nach Anspruch 1 oder 2, **dadurch gekennzeichnet , dass** die Umrichtereinheit (4) und/oder ein Stator (8) der elektrischen Maschine direkt mittels des flüssigen Kühlmittels gekühlt werden.

4. Antriebsgondel nach Anspruch 1, 2 oder 3, **dadurch gekennzeichnet, dass** ein Rotor (16) der elektrischen Maschine (3) in einem gekapselten Rotorraum (17) angeordnet ist und dass der Rotor (16) mittels einer Sprühnebelkühlung oder durch einen Rotorkühlmittelkreislauf gekühlt wird.

5. Antriebsgondel nach Anspruch 4, **dadurch gekennzeichnet, dass** die Sprühnebelkühlung als von dem geschlossenen Kühlmittelkreislauf (13) getrennter eigenständiger Kühlmittelkreislauf ausgebildet ist.

6. Antriebsgondel nach Anspruch 5, **dadurch gekennzeichnet, dass** die Sprühnebelkühlung mittels des geschlossenen Kühlmittelkreislaufs (13) gekühlt wird oder dass das Gehäuse (2) als Kühler für die Sprühnebelkühlung ausgebildet ist.

7. Antriebsgondel nach Anspruch 4, 5 oder 6, **dadurch gekennzeichnet , dass** der Rotor (17) auf einer Rotorwelle (22) angeordnet ist, die in Lagern (23) gelagert ist, und dass auch die Lager (23) mittels der Sprühnebelkühlung gekühlt werden.

8. Antriebsgondel nach einem der Ansprüche 4 bis 7, **dadurch gekennzeichnet , dass** der Rotor (16) über ein Getriebe (24) auf eine Strömungsmaschine (25) wirkt

9. Antriebsgondel nach Anspruch 8, **dadurch gekennzeichnet, dass** das Getriebe (24) innerhalb des gekapselten Rotorraums (17) angeordnet ist.

10. Antriebsgondel nach einem der obigen Ansprüche, **dadurch gekennzeichnet , dass** mit dem geschlossenen Kühlmittelkreislauf (13) ein Druckausgleichsgefäß (27) verbunden ist.

11. Antriebsgondel nach einem der obigen Ansprüche, **dadurch gekennzeichnet , dass** das flüssige Kühlmittel in dem geschlossenen Kühlmittelkreislauf (13) mittels einer Umwälzpumpe (14) umgewälzt wird.

12. Antriebsgondel nach einem der obigen Ansprüche, **dadurch gekennzeichnet , dass** die Umrichtereinheit (4) mehrere Umrichter (4') aufweist, die jeweils ein Wicklungssystem (9') der elektrischen Maschine (3) speisen, so dass die elektrische Maschine auch bei Ausfall eines Umrichters und/oder des dem jeweiligen Umrichter zugeordneten Wicklungssystems mittels der verbleibenden Umrichter und der verbleibenden Wicklungssysteme weiter betriebsfähig bleibt.

13. Antriebsgondel nach einem der obigen Ansprüche, **dadurch gekennzeichnet , dass** der geschlossene Kühlmittelkreislauf (13) eine Leiterdirektkühlung und/oder eine Mantelkühlung der elektrischen Maschine (3) umfasst.
